# EUROPÄISCHE PATENTSCHRIFT

(11) **EP 0 735 631 B1**
(45) Veröffentlichungstag und Bekanntmachung des Hinweises auf die Patenterteilung: **24.07.2002**
(21) Anmeldenummer: 96104002.9
(22) Anmeldetag: 14.03.1996
(51) Int. Cl.: H01R 35/04, B60R 16/02, H01R 35/02

(54) **Vorrichtung zur Signalübertragung zwischen zwei Endstellen**
Device for signal transmission between two terminals
Dispositif de transmission de signaux entre deux terminaux

(30) Priorität: 30.03.1995 DE 19511653
(43) Veröffentlichungstag der Anmeldung: 02.10.1996
(73) Patentinhaber: Alcatel Kabel AG & Co., 30179 Hannover (DE)
(72) Erfinder: Wolf, Klaus Uwe, Dipl.-Ing., 91058 Erlangen (DE)
(74) Vertreter: Döring, Roger, Dipl.-Ing.

(56) Entgegenhaltungen:
- DE-A- 4 419 077
- US-A- 5 224 871

## Beschreibung

Die Erfindung bezieht sich auf eine Vorrichtung zur Signalübertragung zwischen zwei Endstellen, von denen mindestens eine relativ zu der anderen bewegbar ist und die durch mindestens eine in Windungen verlaufende Leitung verbunden sind, an welche an den beiden Endstellen weiterführende Leitungen anschließbar sind, bei welcher die Leitung in einer im wesentlichen kreisringförmig ausgebildeten Kassette untergebracht ist, die aus einem eine der Endstellen tragenden Stator und aus einem um ihre Achse und gegenüber dem Stator drehbaren, die andere Endstelle tragenden Rotor besteht, bei welcher die Windungen der Leitung in einen inneren Wickelbereich und einen äußeren Wickelbereich mit unterschiedlicher Wickelrichtung unterteilt sind, zwischen denen eine etwa U-förmig ausgebildete Umkehrstelle liegt, und bei welcher zwischen den beiden Wickelbereichen ein ringförmiger, die Umkehrstelle der Windungen umfassender Führungskörper angebracht ist, der in Umfangsrichtung der Kassette bewegbar ist und bei dem zumindest die innere Umfangsfläche als Anlage für die Windungen des inneren Wickelbereichs ausgebildet ist (DE-A-42 11 264).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der EP-A-0 417 350 wird für die Signalübertragung elektrischer Strom verwendet. Die Stromübertragung erfolgt durch eine nach Art eines Federhauses zu einem Wickelkörper gewickelte und in einer Kassette untergebrachte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die FBL kann so die Drehbewegungen eines Lenkrads mitmachen, ohne daß der Signalpfad unterbrochen wird. Damit in beiden Drehrichtungen eine ausreichende Anzahl von Umdrehungen durchgeführt werden kann, wird eine entsprechend lange FBL benötigt, die in einer großen Anzahl von Windungen in der Kassette liegt. Diese Vorrichtung ist prinzipiell in der Praxis einsetzbar. Wegen der großen Länge der Leitung und deren relativ hohem ohmschen Widerstand können aber insbesondere bei geringen Stromstärken für die zu übertragenden Signale Schwierigkeiten auftreten.

Bei der Vorrichtung nach der eingangs erwähnten DE-A-42 11 264 ist die Länge der zwischen den beiden Endstellen eingesetzten Leitung wesentlich kürzer als bei der im Vorangehenden geschilderten Vorrichtung. Die gewickelte Leitung ist in einen inneren und einen äußeren Wickelbereich unterteilt, in denen die Windungen unterschiedliche Wickelrichtung haben. Die beiden Wickelbereiche sind durch eine etwa U-förmige Umkehrstelle miteinander verbunden.

Zwischen den beiden Wickelbereichen liegt ein die Umkehrstelle umfassender, ringförmiger Führungskörper, der in Umfangsrichtung der Kassette bewegbar ist. Er wird durch die gewickelte Leitung bzw. durch deren Umkehrstelle bewegt, wenn der Rotor der Kassette gedreht wird. Der Führungskörper weist mehrere, in Umfangsrichtung gegeneinander versetzte und jeweils um eine Achse drehbare Rollen auf, an denen sowohl vom inneren Wickelbereich als auch vom äußeren Wickelbereich jeweils eine Windung der Leitung anliegt, wenn der Rotor gedreht wird. Die Rollen verhindern, daß die Windung des inneren Bereichs sich zu fest an den Führungskörper anlegt, der dadurch blockiert wäre. Der Führungskörper dieser bekannten Vorrichtung ist insbesondere wegen der jeweils gesondert gelagerten Rollen aufwendig.

Der Erfindung liegt die Aufgabe zugrunde, die eingangs geschilderte Vorrichtung einfacher zu gestalten.

Diese Aufgabe wird gemäß der Erfindung dadurch gelöst,
- daß der Führungskörper einteilig ausgebildet ist und zumindest an seiner dem inneren Wickelbereich zugewandten Innenseite über den ganzen Umfang verteilt, in Richtung des Mittelpunkts des Führungskörpers radial nach außen vorstehende und in Umfangsrichtung gegeneinander versetzte Vorsprünge hat,
- daß der Führungskörper an seiner dem inneren Wickelbereich zugewandten Innenseite zwischen je zwei Vorsprüngen konvex gebogene Wände aufweist, deren Mindestabstand vom Mittelpunkt des Führungskörpers größer als der Mindestabstand der Vorsprünge von demselben ist und
- daß in den Übergangsbereichen zwischen den Wänden und den Vorsprüngen zumindest auf der Seite derselben, die der Drehrichtung des Führungskörpers bei im Durchmesser größer werdendem innerem Wickelbereich abgewandt ist, jeweils mindestens ein Noppen angebracht ist, der einen kleineren Mindestabstand als die zugehörige Wand aber einen größeren Mindestabstand als der zugehörige Vorsprung vom Mittelpunkt des Führungskörpers hat.

Der Führungskörper dieser Vorrichtung ist einteilig und daher einfach aufgebaut. Er besteht vorzugsweise aus Kunststoff und kann beispielweise durch Spritzgießen in einem Arbeitsgang hergestellt werden. Zusatzteile brauchen weder gesondert erzeugt noch am Führungskörper montiert zu werden. Durch die Vorsprünge, Noppen und konvexen Wände ergibt sich eine immer wieder unterbrochene Umfangsfläche des Führungskörpers mit relativ wenigen Anlageflächen bzw. Anlagepunkten für die am Führungskörper anliegende Windung des inneren Wickelbereichs der Leitung. Der Führungskörper verhindert dadurch beim Drehen des Rotors wirksam ein Auswandern der Windungen in radialer Richtung, ohne daß die Gefahr besteht, daß die jeweils anliegende Windung der Leitung mit dem Führungskörper verklemmt. Das ist von wesentlicher Bedeutung für den inneren Wickelbereich, wenn dessen Windungen in der einen Drehrichtung des Rotors "aufgehen" und dabei den Führungskörper schieben. Die gegeneinander versetzten Vorsprünge und die dazwischen liegenden konvexen Wände ermöglichen ein Ausbiegen der am Führungskörper anliegenden Windung der Leitung zwischen je zwei Vorsprüngen, bis zu deren Anliegen an einer der konvexen Wände. Die entsprechende Windung der Leitung bleibt daher immer relativ lose. Sie kann nicht auf einer größeren Länge satt am Führungskörper anliegen. Durch die neben den Vorsprüngen angeordneten Noppen ist außerdem sichergestellt, daß die am Führungskörper anliegende Windung der Leitung bei größer werdendem innerem Wickelbereich und damit verbundenem "Schieben" des Führungskörpers durch die Leitung nicht in eine Vertiefung eindringt und möglicherweise verklemmt, die sonst im Übergangsbereich zwischen einem Vorsprung und einer anschließenden Wand vorhanden wäre.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 eine Ansicht einer Kassette zur Signalübertragung in schematischer Darstellung.
Fig. 2 eine Draufsicht auf einen in der Kassette verwendbaren Führungskörper.
Fig. 3 einen Schnitt durch Fig. 2 längs der Linie III - III.

Die Erfindung wird im folgenden für eine Vorrichtung beschrieben, in deren Kassette eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Es ist prinzipiell auch möglich, zwei oder mehr Leitungen in der Kassette anzuordnen. Stellvertretend für alle anderen Möglichkeiten wird im folgenden von nur einer FBL mit elektrischen Leitern ausgegangen.

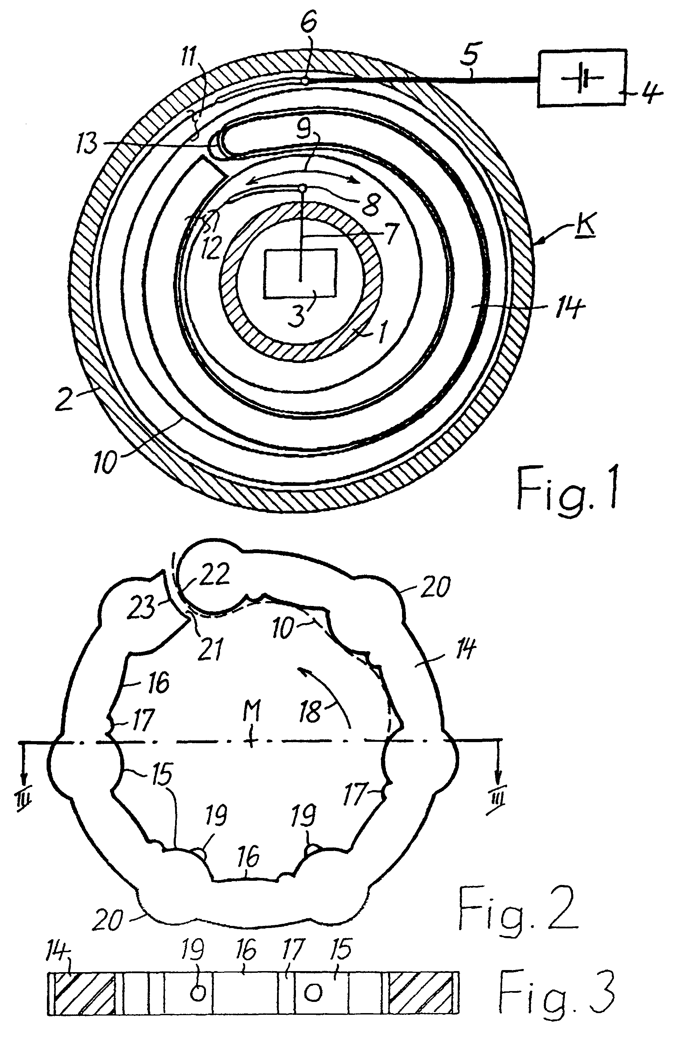

In Fig. 1 sind schematisch zwei beispielsweise kreisförmig ausgebildete Wände 1 und 2 einer im wesentlichen kreisringförmigen Kassette K dargestellt. Sie ist für den Einbau in das Lenkrad eines Kraftfahrzeugs bestimmt. Die Wand 1 soll im dargestellten Ausführungsbeispiel zum Rotor der Kassette K gehören, während die Wand 2 Teil des Stators derselben ist. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses an den Endstellen 6 und 8 sind nicht genauer dargestellt. Sie sind prinzipiell in unterschiedlichen Varianten bekannt und hier nicht von Bedeutung.

Die FBL 10 ist gemäß Fig. 1 in der Kassette K zwischen den beiden Endstellen 6 und 8 in Windungen angeordnet, die in einen äußeren Wickelbereich 11 und einen inneren Wickelbereich 12 unterteilt sind. Die beiden Wickelbereiche 11 und 12 sind durch Klammern gekennzeichnet. Sie umfassen in der aus Fig. 1 ersichtlichen Mittelstellung bzw. in der Montageposition der Kassette K jeweils zwei bis drei Windungen. In den beiden Wickelbereichen 11 und 12 haben die Windungen der FBL 10 entgegengesetzte Wickelrichtungen. Die Wickelbereiche 11 und 12 sind durch eine etwa U-förmig ausgeführte Umkehrstelle 13 miteinander verbunden. Zwischen den beiden Wickelbereichen 11 und 12 ist ein einteiliger, ringförmig ausgeführter Führungskörper 14 angebracht, der die Umkehrstelle 13 umfaßt.

Der Führungskörper 14 ist in Umfangsrichtung der Kassette K, also in Richtung des Doppelpfeils 9, leicht beweglich. Er kann als geschlossener Ring mit einem Durchlaß für die Umkehrstelle 13 der FBL 10 ausgeführt sein. Er kann aber auch ein offener Ring sein, der sich nahezu über 360° erstreckt, so wie es in Fig. 1 dargestellt ist. Der Führungskörper 14 besteht vorzugsweise aus Kunststoff. Er ist dadurch sehr leicht, so daß er leichtgängig und nahezu geräuschfrei in der Kassette K bewegt werden kann. Die genauere Ausgestaltung des Führungskörpers 14 geht aus den Fig. 2 und 3 hervor.

Der in Fig. 2 dargestellte Führungskörper 14 hat an seiner inneren Oberfläche Vorsprünge 15, die in Umfangsrichtung gegeneinander versetzt sind. Die Vorsprünge 15 ragen in Richtung des Mittelpunkts M des Führungskörpers 14 radial über denselben hinaus. Ihre axiale Höhe entspricht der Breite der in der Kassette K eingesetzten FBL 10. Sie sind vorzugsweise konvex gebogen, so wie es aus Fig. 2 hervorgeht. Zwischen den Vorsprüngen 15 hat der Führungskörper 14 konvex gebogene Wände 16, deren Mindestabstand vom Mittelpunkt M größer als der Mindestabstand der Vorsprünge 15 von demselben ist.

Jeweils im Übergangsbereich zwischen einer Wand 16 und einem Vorsprung 15 ist auf einer Seite desselben ein Noppen 17 angebracht, dessen Mindestabstand vom Mittelpunkt M des Führungskörpers 14 größer als der Mindestabstand des Vorsprungs 15 aber kleiner als der Mindestabstand der Wand 16 von demselben ist. Die Noppen 17 befinden sich auf der Seite der Vorsprünge 15, die der durch den Pfeil 18 gekennzeichneten Drehrichtung des Führungskörpers 14 bei im Durchmesser größer werdenden innerem Wickelbereich 12 der FBL 10 abgewandt ist. Grundsätzlich könnte auch auf der anderen Seite der Vorsprünge 15 ein entsprechender Noppen angeordnet sein. Statt nur eines Noppens 17 können auch zwei oder mehr entsprechend abgestufte Noppen vorhanden sein, die den Übergangsbereich zwischen Wand 16 und Vorsprung 15 jeweils sinnvoll auffüllen, beispielsweise in Form einer Kettenlinie. Die Noppen 17 können beispielsweise als Kugelkalotten ausgebildet sein.

Der jeweilige Abstand von Noppen 15, Wänden 16 und Noppen 17 vom Mittelpunkt M des Führungskörpers 14 ist als "Mindestabstand" bezeichnet, weil neben den Wänden 16 zweckmäßig auch die Vorsprünge 15 und die Noppen 17 konvex gebogen sind. Die resultierende Anlagefläche für die äußere Windung der FBL 10 im inneren Wickelbereich 12 ist dadurch klein gehalten. Sie kann weiter verkleinert werden, wenn an den Vorsprüngen 15 gemäß Fig. 3 etwa mittig nach außen vorspringende Kugelkalotten 19 angebracht werden, an denen die Windung der Leitung 10 gegebenenfalls anliegt. In Fig. 2 sind an zwei Vorsprüngen 15 Kugelkalotten 19 eingezeichnet.

An der äußeren Oberfläche des Führungskörpers 14 sind im dargestellten Ausführungsbeispiel Vorsprünge 20 vorgesehen, die radial nach außen weisen und in Umfangsrichtung gegen einander versetzt sind. Die Vorsprünge 20 liegen gemäß Fig. 2 den Vorsprüngen 15 direkt gegenüber und ergänzen dieselben quasi zu einem Kreis. Sie können gegenüber den Vorsprüngen 15 aber auch in Umfangsrichtung versetzt sein. Die Vorsprünge 20 dienen als unterbrochene Anlagefläche für die Windungen des äußeren Wickelbereichs 11 der FBL 10.

Die Umkehrstelle 13 der FBL 10 wird im dargestellten Ausführungsbeispiel in einem Spalt 21 des Führungskörpers 14 angeordnet, der zwischen den beiden Kanten 22 und 23 liegt. In der dem Pfeil 18 entgegengesetzten Drehrichtung des Rotors der Kassette K liegt die FBL 10 in der Umkehrstelle 13 an der Kante 22 an. Der Führungskörper 14 wird dann durch die FBL 10 gezogen. Der innere Wickelbereich 12 verringert dabei seinen Durchmesser. In der anderen, durch den Pfeil 18 gekennzeichneten Drehrichtung des Rotors der Kassette K schiebt die Umkehrstelle 13 der FBL 10 den Führungskörper 14 unter Anlage an der Kante 23. Der innere Wickelbereich 12 vergrößert dabei seinen Durchmesser, so daß eine Windung desselben am Führungskörper 14 anliegt.

In der durch den Pfeil 18 gekennzeichneten Drehrichtung des Rotors der Kassette K gehen die inneren Windungen der FBL 10 also auf einen größeren Durchmesser auf. Sie werden durch die Drehung des Rotors selbst in Richtung des Pfeiles 18 bewegt und schieben dabei den Führungskörper 14 in der gleichen Richtung. Dabei könnte es geschehen, daß die am Führungskörper 14 anliegende Windung der FBL 10 sich in den relativ tiefen Übergangsbereich zwischen einem Vorsprung 15 und einer Wand 16 hineinschiebt und dabei verklemmt bzw. geknickt wird. Die Bewegung der FBL 10 und des Führungskörpers 14 wären dadurch behindert. Die Noppen 17 verhindern das. Die Windung der FBL 10 wird durch die Noppen 17 abgestützt. Sie bleibt dadurch insgesamt schwach gebogen, so wie es in Fig. 2 gestrichelt eingezeichnet ist. Die Windung der FBL 10 liegt damit insgesamt mit geringer Fläche am Führungskörper 14 an, der störungsfrei in Richtung des Pfeiles 18 bewegt bzw. geschoben wird.

Wie weiter oben erwähnt, entspricht die Höhe der Vorsprünge 15 der Breite der FBL 10. Das gilt grundsätzlich auch für den ganzen Führungskörper 14 mit Vorsprüngen 15 und 20 sowie Noppen 17. Der Führungskörper 14 kann insgesamt aber auch niedriger oder höher als die Leitungsbreite ausgeführt sein.

## Patentansprüche

1. Vorrichtung zur Signalübertragung zwischen zwei Endstellen (6, 8), von denen mindestens eine relativ zu der anderen bewegbar ist und die durch mindestens eine in Windungen verlaufende Leitung (10) verbunden sind, an welche an den beiden Endstellen weiterführende Leitungen anschließbar sind (6, 8), bei welcher die Leitung (10) in einer im wesentlichen kreisringförmig ausgebildeten Kassette (K) untergebracht ist, die aus einem eine der Endstellen (6, 8) tragenden Stator und aus einem um ihre Achse und gegenüber dem Stator drehbaren, die andere Endstelle tragenden Rotor besteht, bei welcher die Windungen der Leitung (10) in einen inneren Wickelbereich (12) und einen äußeren Wickelbereich (11) mit unterschiedlicher Wickelrichtung unterteilt sind, zwischen denen eine etwa U-förmig ausgebildete Umkehrstelle (13) liegt, und bei welcher zwischen den beiden Wickelbereichen ein ringförmiger, die Umkehrstelle der Windungen umfassender Führungskörper (14) angebracht ist, der in Umfangsrichtung der Kassette (K) bewegbar ist und bei dem zumindest die innere Umfangsfläche als Anlage für die Windungen des inneren Wickelbereichs (12) ausgebildet ist, **dadurch gekennzeichnet,**
- **daß** der Führungskörper (14) einteilig ausgebildet ist und zumindest an seiner dem inneren Wickelbereich (12) zugewandten Innenseite über den ganzen Umfang verteilt, in Richtung des Mittelpunkts (M) des Führungskörpers (14) radial nach außen vorstehende und in Umfangsrichtung gegeneinander versetzte Vorsprünge (15) hat,
- **daß** der Führungskörper (14) an seiner dem inneren Wickelbereich (12) zugewandten Innenseite zwischen je zwei Vorsprüngen (15) konvex gebogene Wände (16) aufweist, deren Mindestabstand vom Mittelpunkt (M) des Führungskörpers (14) größer als der Mindestabstand der Vorsprünge (15) von demselben ist und
- **daß** in den Übergangsbereichen zwischen den Wänden (16) und den Vorsprüngen (15) zumindest auf der Seite derselben, die der Drehrichtung des Führungskörpers (14) bei im Durchmesser größer werdendem innerem Wickelbereich (12) abgewandt ist, jeweils mindestens ein Noppen (17) angebracht ist, der einen kleineren Mindestabstand als die zugehörige Wand (16) aber einen größeren Mindestabstand als der zugehörige Vorsprung (15) vom Mittelpunkt (M) des Führungskörpers (14) hat.

2. Vorrichtung nach Anspruch 1, **dadurch gekennzeichnet, daß** die Vorsprünge (15) konvex gebogen sind und eine der Höhe der Leitung (10) entsprechende Höhe haben.

3. Vorrichtung nach Anspruch 1 oder 2, **dadurch gekennzeichnet, daß** an den Vorsprüngen (15) radial vorstehende Kugelkalotten (19) angebracht sind.

## Claims

1. A device for the signal transmission between two end points (6, 8), at least one of which may be moved relative to the other, which are connected by at least one bent lead (10), wherein continuing leads may be connected to the two end points (6, 8) and the lead (10) is stored essentially in a cyclic case (K) consisting of one stator holding one of the end points (6, 8) and one rotor, which may be rotated around the case axis and around the stator, holding the other end point, the windings of the lead (10) are divided into an inner winding area (12) and an outer winding area (10) with different winding direction, between the two winding areas, there is a turning point (13), which is approximately U-shaped, and also between the two winding areas, there is a guide (14) surrounding the winding turning point, which is movable in the direction of the case (K) circumference and where at least the inner circumference surface is designed as a support for the windings of the inner winding area (11), **characterized in that**
- the guide (14) is designed in one part and equipped with ledges (15) at least on the inner side facing the inner winding area (12), wherein the ledges are spread out over the entire circumference, are protruding radially to the outside in direction of the center (M) of the guide (14), and are staggered in direction of the circumference,
- the guide (14) is equipped with convex walls (16) between two ledges (15) on the inner side facing the inner winding area (12), wherein the minimum distance from the center (M) of the guide (14) is larger than the minimum distance of the ledges (15) from the center, and
- at least one nipple (17) is added in the transition area between the walls (16) and the ledges (15), if not on both sides then at least on the side of the wall that faces away from the rotary direction of the guide (14) when the diameter of the inner winding area (12) increases, wherein the nipple has a smaller minimum distance than the corresponding wall (16), but a larger minimum distance than the distance between the corresponding ledge (15) and the center point (M) of the guide (14).

2. A device according to claim 1, **characterized in that** the ledges (15) are convex and have a height corresponding to the height of the lead (10).

3. A device according to claim 1 or 2, **characterized in that** radially protruding spherical caps (19) are attached to the ledges (15).

## Revendications

1. Dispositif pour la transmission de signaux entre deux points terminaux (6. 8) dont l'un au moins est mobile par rapport à l'autre et qui sont reliés par au moins uncâble enroulé en spires (10) aux deux extrémités de laquelle peuvent être raccordées d'autres câbles (6, 8), dans lequel le câble (10) est logé dans une cassette (K) de forme essentiellement annulaire, se composant d'un stator portant l'un des points terminaux (6, 8) et d'un rotor portant l'autre point terminal et qui tourne à la fois autour de son axe et autour du stator, dans lequel les spires du câble (10) sont réparties en une zone d'enroulement intérieure (12) et une zone d'enroulement extérieure (11) avec un sens d'enroulement différent, entre lesquelles se trouve un point d'inversion (13) en forme approximative de U et dans lequel est disposé, entre les deux zones d'enroulement, un corps de guidage (14) annulaire, entourant le point d'inversion des spires. mobile dans le sens de la circonférence de la cassette (K) et sur lequel au moins la surface de sa circonférence intérieure forme un appui pour les spires de la zone d'enroulement intérieure (12), **caractérisé en ce que**
- le corps de guidage (14) est réalisé en une seule pièce et possède, au moins sur sa face intérieure faisant face à la zone d'enroulement intérieure (12), des saillies (15) réparties sur toute la circonférence, dépassant radialement vers l'extérieur en direction du centre (M) du corps de guidage (14) et décalées les unes par rapport aux autres dans le sens de la circonférence,
- le corps de guidage (14) présente, sur sa face intérieure faisant face à la zone d'enroulement intérieure (12), entre deux saillies (15), des parois (16) convexes, dont la distance minimale du centre (M) du corps de guidage (14) est supérieure à la distance minimale des saillies (15) dudit centre et
- **en ce qu'**au moins un ergot (17) est disposé dans les zones de transition entre les parois (16) et les saillies (15), au moins sur le côté de celles-ci qui est opposé au sens de rotation du corps de guidage (14) pour lequel le diamètre de la zone d'enroulement intérieure (12) augmente, qui possède une distance minimale inférieure à celle de la paroi afférente (16), mais une distance minimale supérieure à celle de la saillie (15) afférente par rapport au centre (M) du corps de guidage (14).

2. Dispositif selon la revendication 1, **caractérisé en ce que** les saillies (15) sont courbées de façon convexe et possèdent une hauteur correspondant à la hauteur du câble (10).

3. Dispositif selon la revendication 1 ou 2, **caractérisé en ce que** des calottes sphériques (19) sont disposées radialement sur les saillies (15).
